Europäisches Patentamt

European Patent Office

Office européen des brevets

(19)

(11) Veröffentlichungsnummer : **0 150 371**
**B1**

(12) **EUROPÄISCHE PATENTSCHRIFT**

(45) Veröffentlichungstag der Patentschrift :
09.11.88

(51) Int. Cl.⁴ : **G 11 B   5/127**

(21) Anmeldenummer : 84115093.1

(22) Anmeldetag : 10.12.84

(54) Dünnschicht-Magnetkopf für ein senkrecht zu magnetisierendes Aufzeichnungsmedium.

(30) Priorität : 23.12.83 DE 3346885

(43) Veröffentlichungstag der Anmeldung :
07.08.85 Patentblatt 85/32

(45) Bekanntmachung des Hinweises auf die Patenterteilung : 09.11.88 Patentblatt 88/45

(84) Benannte Vertragsstaaten :
DE FR GB IT

(56) Entgegenhaltungen :
EP-A- 0 012 910
EP-A- 0 071 489
EP-A- 0 078 374
EP-A- 0 146 861
FR-A- 2 428 886
JP-A-55 012 522
JP-A-57 135 418
PATENT ABSTRACTS OF JAPAN, Band 7, Nr. 224, 5. Oktober 1983, Seite (P-227) (1369); & JP-A-58-114321 (FUJITSU) 07-07-1983

(73) Patentinhaber : Siemens Aktiengesellschaft Berlin und München
Wittelsbacherplatz 2
D-8000 München 2 (DE)

(72) Erfinder : Schewe, Herbert, Dr.
Haydnstrasse 58
D-8522 Herzogenaurach (DE)

**Beschreibung**

Die Erfindung bezieht sich auf einen Dünnschicht-Magnetkopf mit einem schichtweisen Aufbau auf einem nicht-magnetischen Substrat für ein Aufzeichnungsmedium, das mit einer magnetisierbaren Speicherschicht versehen ist, in welche längs einer Spur Informationen durch senkrechte (vertikale) Magnetisierung der Speicherschicht einzuschreiben sind. Dieser Magnetkopf weist einen den magnetischen Fluß führenden Leitkörper auf, der einen von zwei Magnetschenkeln ringkopfähnlich ausgebildeten Kopfteil und einen über die dem Aufzeichnungsmedium abgewandte Seite dieses Kopfteiles hinaus verlängerten Schenkelteil enthält, wobei die dem Aufzeichnungsmedium zugewandten Pole der beiden Magnetschenkel in Bewegungsrichtung des Kopfes gesehen hintereinander und mit vorbestimmtem Abstand zueinander angeordnet sind. Ferner enthält dieser Magnetkopf eine zumindest weitgehend flache, nur für die Lesefunktion dienende Spulenwicklung, deren Windungen sich durch einen zwischen den Magnetschenkeln ausgebildeten Zwischenraum erstrecken. Außerdem ist dieser Magnetkopf mit einer zusätzlichen, zumindest weitgehend flachen Spulenwicklung für die Schreibfunktion versehen, die einen dem Aufzeichnungsmedium zugewandten Wicklungsteil im Bereich eines der beiden Magnetschenkel des ringkopfähnlichen Kopfteiles und einen gegenüberliegenden, von dem Aufzeichnungsmedium abgewandten Wicklungsteil an dem verlängerten Schenkelteil aufweist. Ein Magnetkopf mit diesen Gestaltungsmerkmalen geht aus der JP-A-57 135 418 hervor.

Das Prinzip der senkrechten Magnetisierung zur Speicherung von Informationen ist allgemein bekannt (vgl. z. B. « IEEE Transactions on Magnetics », vol. MAG-16, no. 1, Jan. 1980, Seiten 71 bis 76 ; DE-A-29 24 013 oder EP-A-0 012 910). Für dieses Prinzip, das vielfach auch als vertikale Magnetisierung bezeichnet wird, sind besondere Aufzeichnungsmedien in Form von starren Magnetspeicherplatten, flexiblen Einzelplatten (Floppy Disks) oder Magnetbändern erforderlich. Ein entsprechendes Aufzeichnungsmedium weist mindestens eine magnetisierbare Speicherschicht vorbestimmter Dicke auf, welche ein magnetisch anisotropes Material, insbesondere aus einer CoCr-Legierung enthält. Dabei ist die Achse der sogenannten leichten Magnetisierung dieser Schicht senkrecht zur Oberfläche des Mediums gerichtet. Mittels eines besonderen Magnetkopfes werden dann längs einer Spur die einzelnen Informationen in aufeinanderfolgenden Abschnitten, auch Zellen oder Blöcke genannt, durch entsprechende Magnetisierung der Speicherschicht eingeschrieben. In der Praxis werden im allgemeinen die magnetischen Flußwechsel, d. h. die Übergänge von einer Magnetisierungseinrichtung zur entgegengesetzten, als Informationen benutzt. Die Abschnitte haben dabei eine vorbestimmte, auch als Wellenlänge bezeichnete Ausdehnung in Längsrichtung der Spur. Diese Ausdehnung kann im Vergleich zu der Grenze, die bei dem Verfahren der longitudinalen (horizontalen) Speicherung durch die Entmagnetisierung gegeben ist, wesentlich kleiner sein. Somit läßt sich nach dem Prinzip der senkrechten Magnetisierung die Informationsdichte in dem Aufzeichnungsmedium vorteilhaft vergrößern.

Die für das Prinzip der longitudinalen Magnetisierung bekannten kombinierten Schreib- und Lese-Köpfe, d. h., mit denen sowohl die Schreibals auch die Lese-Funktion auszuüben ist, können jedoch nicht ohne weiteres auch für eine senkrechte Magnetisierung eingesetzt werden. Bei Verwendung dieser Köpfe, die im allgemeinen ringkopfähnliche Gestalt haben, läßt sich zwar die allgemein auch bei dem Prinzip der senkrechten Magnetisierung angestrebte Flußführung zu einem möglichst geschlossenen Kreis mit geringem magnetischen Widerstand erreichen. Jedoch ist ein Schreiben beider Pole dieser Ringköpfe kaum zu unterdrücken, so daß sich entsprechende Schwierigkeiten beim Lesen der eingeschriebenen Informationen ergeben.

Man sieht sich deshalb gezwungen, für das Prinzip der senkrechten Magnetisierung spezielle Schreib- und Lese-Köpfe zu entwickeln. Ein hierfür geeigneter Magnetkopf weist im allgemeinen einen sogenannten Hauptpol auf, mit dem ein hinreichend starkes senkrechtes Magnetfeld zum Ummagnetisieren der einzelnen Abschnitte der Speicherschicht erzeugt wird. Der notwendige magnetische Rückschluß kann dann z. B. durch einen sogenannten Hilfspol auf der gegenüberliegenden Seite des Aufzeichnungsmediums erfolgen (vgl. die genannte Literaturstelle « IEEE Trans. Magn. », vol. MAG-16). Ein magnetischer Rückschluß läßt sich ferner auch mit einem besonderen Hilfspol vornehmen, der sich auf derselben Seite wie der Hauptpol befindet (vgl. « IEEE Trans. Magn. », vol. MAG-17, no. 6, Nov. 1981, Seiten 3120 bis 3122 oder vol. MAG-18, no. 6, Nov. 1982, Seiten 1158 bis 1163 ; die genannte DE-A-2 924 013). Dementsprechend enthält der aus der genannten DE-A-2 924 013 bekannte Schreib- und Lese-Magnetkopf einen den magnetischen Fluß führenden, ringkopfähnlichen Leitkörper aus zwei Magnetschenkeln, deren dem Aufzeichnungsmedium zugewandten Enden einen Haupt- und Hilfspol bilden, welche in Bewegungsrichtung des Kopfes gesehen hintereinander und mit vorbestimmtem Abstand zueinander angeordnet sind. Durch einen zwischen diesen beiden Magnetschenkeln ausgebildeten und mit Isolationsmaterialien ausgefüllten Zwischenraum erstrecken sich die Windungen einer zumindest weitgehend planaren Spulenwicklung. Mit dieser Wicklung wird für die Schreibfunktion der Hauptpol erregt bzw. für die Lesefunktion die Erregung des Hauptpoles registriert. Sowohl die Windungen dieser elektrischen Wicklung wie auch die Magnetschenkel sind dabei in Dünnschicht-Technik auf einem nicht-magnetischen Substrat aufgebracht.

Bei diesem z. B. aus der DE-A-2 924 013 bekannten Magnetkopftyp soll der Hilfspol in jedem Falle nur zur magnetischen Flußrückführung dienen. Ein eventuelles Mitschreiben des Hilfspols kann gegebenenfalls in Kauf genommen werden, da ihm der schreibende Hauptpol stets nacheilt und somit vom Hilfspol eventuell geschriebene Informationen überschreibt. Um jedoch ein Mitlesen des Hilfspoles mit seiner ablaufenden Kante zumindest weitgehend zu unterbinden, müßte der zwischen den beiden Polen ausgebildete sogenannte Luftspalt verhältnismäßig breit sein, um eine weitgehende Reduzierung der magnetischen Flußdichte am Hilfspol gewährleisten zu können. Entsprechend breite Spaltschichten lassen sich jedoch mit der Dünnschicht-Technik nur schwer realisieren.

Wegen dieser Schwierigkeiten sind auch Magnetköpfe vorgeschlagen worden, bei denen auf eine Verwendung eines besonderen Hilfspoles verzichtet wird (« IEEE Trans. Magn. », vol. MAG-18, no. 6, Nov. 1982, Seiten 1170 bis 1172 ; EP-A-0 071 489). Bei diesen Magnetköpfen erfolgt der notwendige magnetische Rückschluß durch den Streufluß. Dementsprechend enthält der aus der EP-A-0 071 489 bekannte Magnetkopf im wesentlichen nur einen einzigen, dem Aufzeichnungsmedium zugewandten Magnetschenkel, dem eine planare Schreib- und Spulenwicklung zugeordnet ist. Mit einem solchen auch als Einzel-Pol-Kopf bezeichneten Magnetkopf läßt sich zwar ein hinreichend deutliches und hochfrequentes Schreibsignal erzeugen, falls die Induktivität der Spulenwicklung nicht zu hoch ist. Andererseits kann bei fehlendem Hilfspol kein ausreichend großes Lesesignal gewonnen werden.

Auf Grund dieser erwähnten Probleme beim Lesen sind auch. Systeme mit getrennten Schreib- und Lese-Köpfen bekannt, um so diese Köpfe an die jeweilige Funktion optimal anpassen zu können (« IEEE Trans. Magn. », vol. MAG-16, no. 5, Sept. 1980, Seiten 967 bis 972 oder vol. MAG-17, no. 6, Nov. 1981, Seiten 2538 bis 2540). Für das Lesen lassen sich die vom Prinzip der longitudinalen Magnetisierung an sich bekannten Ringköpfe verwenden, während das Schreiben mit den erwähnten Einzel-Pol-Köpfen durchzuführen ist. Dabei können diese Einzel-Pol-Köpfe jeweils einen Hilfspol auf der Rückseite des Aufzeichnungsmediums aufweisen. Entsprechende Systeme zum Lesen und Schreiben mit getrennten, an die jeweilige Funktion angepaßten besonderen Köpfen sind jedoch konstruktiv verhältnismäßig aufwendig.

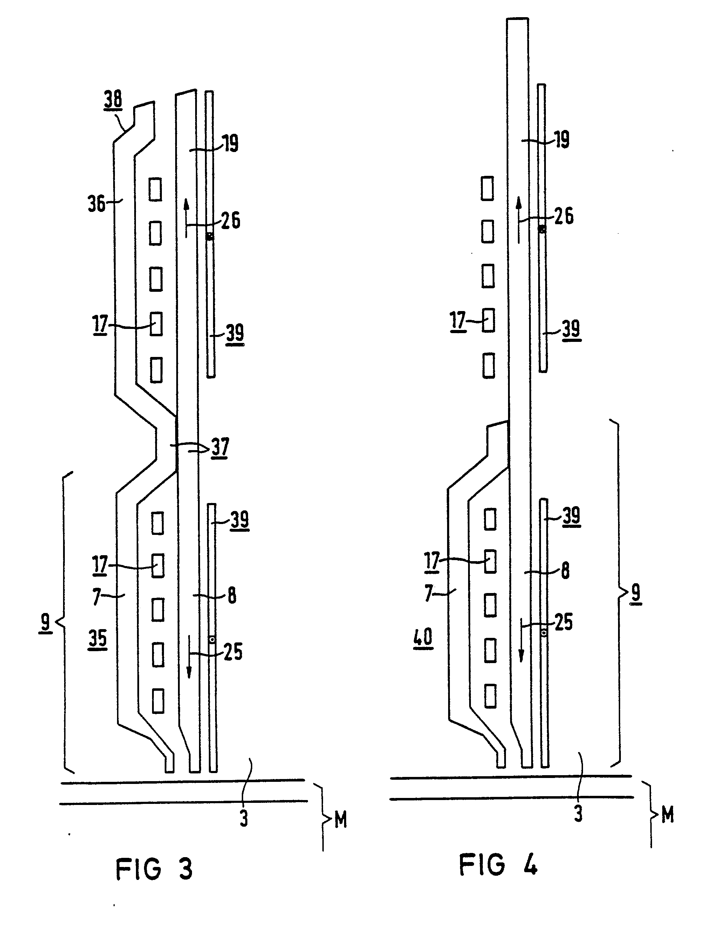

Man hat deshalb auch kombinierte Magnetköpfe konzipiert, die zwar ringkopfähnliche Gestalt ihres magnetischen Leitkörpers aufweisen und mit denen dennoch eine Schreibfunktion quasi als Einzel-Pol-Kopf auszuüben ist. Einen entsprechenden Kopftyp stellt der aus der eingangs genannten JP-A-57 135 418 zu entnehmende Dünnschicht-Magnetkopf dar. Dieser bekannte Magnetkopf weist nämlich eine besondere Schreibspulenwicklung auf, mit welcher die beiden dem Aufzeichnungsmedium zugewandten Magnetschenkel seines ringkopfähnlichen magnetischen Leitkörpers für die Schreibfunktion in gleicher Richtung zu magnetisieren sind. Mit beiden Magnetschenkeln wird also die Schreibfunktion gemeinsam ausgeübt, d. h. die Ausdehnung einer in das Aufzeichnungsmedium geschriebenen Informationseinheit (-abschnittes) in Spurrichtung ist dementsprechend groß. Der magnetische Leitkörper dieses Kopfes enthält ferner einen über die dem Aufzeichnungsmedium abgewandte Seite seines ringkopfähnlichen Kopfteiles hinaus verlängerten Schenkelteil (vgl. Figur 4). Auf einer vorbestimmten Seite dieses Schenkelteiles liegt dabei ein von dem Aufzeichnungsmedium abgewandter Wicklungsteil der Schreibspulenwicklung, so daß beim Schreiben in diesem verlängerten Schenkelteil jeweils ein Magnetfluß hervorgerufen wird, der in dieselbe Richtung weist wie der in den beiden dem Aufzeichnungsmedium zugewandten Magnetschenkeln erzeugte Magnetfluß. Mit dieser Maßnahme wird erreicht, daß der aus den beiden Magnetschenkeln austretende Fluß zumindest weitgehend gleich stark ist.

Aufgabe der vorliegenden Erfindung ist es, den Schreib- und Lesemagnetkopf der eingangs genannten Art dahingehend auszugestalten, daß mit ihm ein schärferes, d. h. räumlich begrenztes Schreibsignal nach Art eines Einzel-Pol-Kopfes zu erzeugen ist. Hierbei soll eine Beeinflussung eines mit der Lesespulenwicklung verbundenen, empfindlichen Lesespulenverstärkers zumindest weitgehend ausgeschlossen sein.

Diese Aufgabe wird erfindungsgemäß dadurch gelöst, daß sowohl der dem Aufzeichnungsmedium zugewandte Wicklungsteil als auch der gegenüberliegende, von dem Aufzeichnungsmedium abgewandte Wicklungsteil der Schreibspulenwicklung längs derselben Seite des gesamten den magnetischen Fluß führenden Leitkörpers angeordnet sind, wobei die Schreibspulenwicklung von der Lesespulenwicklung magnetisch und räumlich getrennt ist, indem sich zwischen diesen Spulenwicklungen einer der beiden Magnetschenkel des ringkopfähnlichen Kopfteiles und der verlängerte Schenkelteil mit entsprechenden geometrischen Ausdehnungen erstrecken.

Aufgrund der besonderen Anordnung der Schreibspulenwicklung bezüglich· der einzelnen Teile des magnetischen Leitkörpers ist neben einer galvanischen Trennung auch eine vollständige magnetische Trennung der zusätzlichen, nur als Schreibspule dienenden Spulenwicklung von der nur als Lesespule dienenden Wicklung zu erreichen. Die mit dieser Ausgestaltung des Magnetkopfes verbundenen Vorteile sind dann insbesondere darin zu sehen, daß aufgrund der galvanischen Trennung die Schreibspule mit nur einer geringen Windungszahl zu erstellen ist. Hierdurch lassen sich technologisch schwierige Strukturierungsprobleme bei der Herstellung dieser Spulenwicklung vermeiden. Dagegen kann die Lesespulenwicklung, die nur vernachlässigbar wenig Strom zieht, sehr fein strukturiert werden.

Dies bedeutet eine entsprechende Erhöhung der Lesespannung, da die Windungszahl dieser Wicklung recht hoch gewählt werden kann. Mit der magnetischen Entkopplung der beiden Spulenwicklungen können außerdem hohe Spannungsspitzen vermieden werden, welche sich am Eingang eines nachgeschalteten empfindlichen Leseverstärkers bei der Schreibfunktion ergeben.

Da ferner bei dem erfindungsgemäßen Magnetkopf alle Wicklungsteile der Schreibspulenwicklung nur auf einer gemeinsamen Seite des magnetischen Leitkörpers mit ringkopfähnlichem Kopfteil und verlängertem Schenkelteil zu liegen kommen, wird bei der Schreibfunktion in dem verlängerten Schenkelteil immer ein magnetischer Fluß hervorgerufen, der entgegengesetzt zu dem in dem ringkopfähnlichen Kopfteil ist. Dies hat zur Folge, daß der magnetische Fluß in dem unmittelbar anliegenden Magnetschenkel des ringkopfähnlichen Kopfteiles vom Betrag her wesentlich größer ist als der Fluß in dem parallel liegenden, von der Schreibspulenwicklung abgewandten Magnetschenkel. D. h., der Magnetkopf schreibt die Informationen in das Aufzeichnungsmedium vorteilhaft im wesentlichen nur mit einem Pol quasi als Einzel-Pol-Kopf. Die andere, als Lesespule dienende Spulenwicklung bleibt dabei stromlos. Ihr sich durch den Zwischenraum zwischen den beiden Magnetschenkeln erstreckender Wicklungsteil befindet sich dabei vorteilhaft in einem feldfreien Raum. Zum Lesen mit dem Magnetkopf gemäß dem Prinzip der senkrechten Magnetisierung bleibt die zusätzliche Schreibspulenwicklung außer Funktion. Der Magnetkopf kann dabei für diese Lesefunktion in bekannter Weise als Ringkopf betrieben werden.

Vorteilhafte Ausgestaltungen des Magnetkopfes nach der Erfindung gehen aus den Ansprüchen 2-11 hervor.

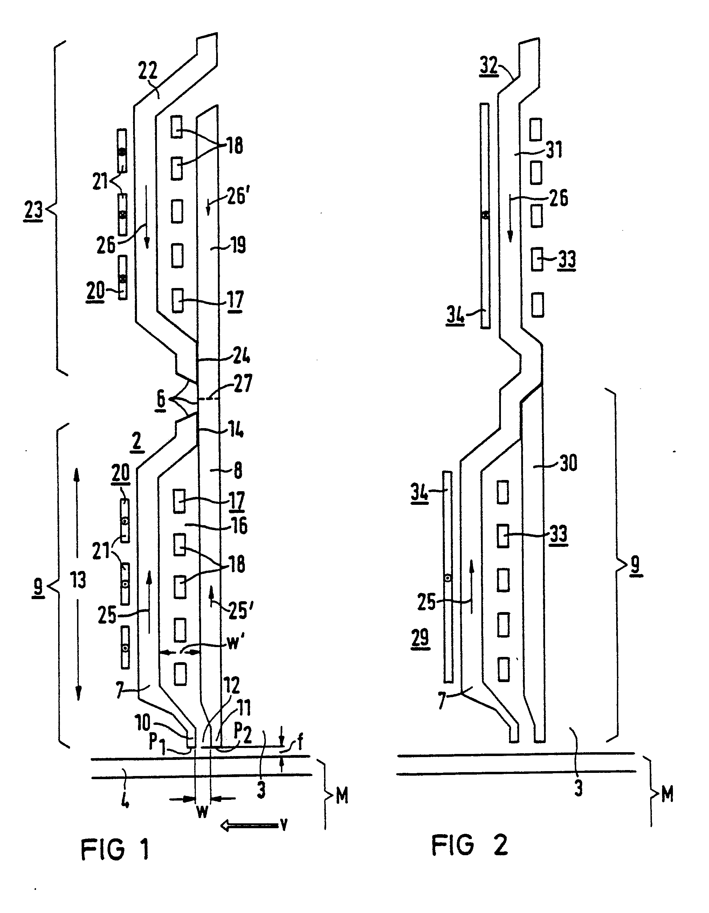

Zur weiteren Erläuterung der Erfindung und deren in den Ansprüchen 2-11 gekennzeichneten Weiterbildungen wird nachfolgend auf die Zeichnung Bezug genommen, in deren Fig. 1 schematisch ein Ausführungsbeispiel eines erfindungsgemäßen Magnetkopfes als Längsschnitt veranschaulicht ist. Die Fig. 2 bis 4 zeigen weitere Ausführungsbeispiele von Magnetköpfen nach der Erfindung in entsprechender Darstellung.

Bei dem in Fig. 1 gezeigten Schreib- und Lese-Magnetkopf nach der Erfindung wird von an sich bekannten ringkopfähnlichen Ausführungsformen für das Prinzip der senkrechten (vertikalen) Magnetisierung ausgegangen (vgl. z. B. die genannten EP-A-0 012 910 und EP-A-0 071 489). Der in der Fig. allgemein mit 2 bezeichnete Kopf, der z. B. während seiner Schreibfunktion gezeigt sein soll, befindet sich auf der Flachseite eines Substrates 3, das z. B. die Stirnseite oder die Rückseite eines gebräuchlichen, als Flugkörper bezeichneten Elementes bildet und in der Fig. nicht näher ausgeführt ist. Dieser Kopf ist relativ zu einem an sich bekannten, vertikal zu magnetisierenden Aufzeichnungsmedium M in geringer Flughöhe f von beispielsweise 0,2 μm über einer besonderen Speicherschicht 4 dieses Mediums z. B. aus CoCr längs einer Spur zu führen. Im allgemeinen wird das Aufzeichnungsmedium unter dem Kopf hinweggeführt. Die entsprechende relative Bewegungsrichtung des Aufzeichnungsmediums M bezüglich des Magnetkopfes 2 ist durch eine mit v bezeichnete gepfeilte Linie angedeutet.

Der Magnetkopf 2 enthält einen den magnetischen Fluß führenden Leitkörper 6 mit zwei Magnetschenkeln 7 und 8, welche einen ringkopfähnlichen Kopfteil 9 bilden. Diese Schenkel sind weitgehend und insbesondere an ihren dem Aufzeichnungsmedium M zugewandten Enden 10 und 11 zumindest annähernd senkrecht zur Oberfläche des Aufzeichnungsmediums M ausgerichtet und bilden dort jeweils einen Magnetpol $P_1$ bzw. $P_2$. Zwischen diesen beiden Polen ist ein Luftspalt 12 mit einer vorteilhaft geringen longitudinalen, d. h. in Bewegungsrichtung v weisenden Weite w von unter 1 μm, insbesondere unter 0,3 μm ausgebildet. In einem mittleren Bereich 13 des ringkopfähnlichen Kopfteiles 9 ist der Abstand zwischen den beiden Magnetschenkeln 7 und 8 gegenüber der Spaltweite w erweitert, indem z. B. der hinsichtlich der Bewegungsrichtung rückwärtige Magnetschenkel 7 in diesem Bereich auf einen größeren Abstand w' bezüglich des vorderen, gerade ausgebildeten und dem Substrat 3 am nächsten liegenden Magnetschenkels 8 führt. Außerhalb dieses Bereiches 13 ist auf der dem Aufzeichnungsmedium M abgewandten Seite der Magnetschenkel 7 in bekannter Weise in einem Verbindungsbereich 14 an den Magnetschenkel 7 angefügt, so daß sich die ringkopfähnliche Gestalt des Kopfteiles 9 ergibt. Durch den sich zwischen den beiden Magnetschenkeln 7 und 8 in den mittleren Bereich 13 so vorhandenen Zwischenraum 16 erstreckt sich eine flache Spulenwicklung 17, die als Lesespule dienen soll. Sie bleibt jedoch für die in der Figur angenommene Schreibfunktion stromlos. Während dieser Funktion wird die Lesespulenwicklung an ihren Enden vorteilhaft mit einem hinreichend niederohmigen Widerstand verbunden bzw. überbrückt, um so eine Beschädigung eines angeschlossenen Leseverstärkers durch induzierte Spannungsspitzen zu verhindern. Von der Spulenwicklung 17 ist in der Figur nur eine einzige Lage mit Windungen 18 gezeigt, obwohl diese Spulenwicklung im allgemeinen mehrlagig ausgebildet wird. Um diese Lagen auf einer möglichst ebenen Fläche aufbringen zu können, ist gemäß dem Ausführungsbeispiel nach Fig. 1 der dem Substrat 3 zugewandte Magnetschenkel 8 über seinen Verbindungsbereich 14 mit dem Magnetschenkel 7 hinaus entsprechend verlängert. Sein Verlängerungsabschnitt ist mit 19 bezeichnet.

Für die Schreibfunktion ist gemäß der Erfindung eine zusätzliche, zumindest weitgehend planare Spulenwicklung 20 vorgesehen, welche einem der beiden Magnetschenkel, beispielsweise dem äußeren, d. h. von dem Substrat 3 abgewandten Schenkel 7 zugeordnet ist. Die Windungen 21 dieser in einer zumindest weitgehend parallelen Ebene zur Lesespulenwicklung 17 angeordneten Schreibspulenwicklung 20 überdecken dabei einen Teil des äußeren Magnetschenkels 7 in dem Bereich 13 des ringkopfähnlichen Kopfteiles 9. Da diese Windungen nicht nur in dem Bereich 13, sondern auch außerhalb des ringkopfähnlichen Kopfteiles 9 räumlich wie insbesondere auch magnetisch von den Windungen 18 der Lesespulenwicklung 17 getrennt sein sollen, muß der den magnetischen Fluß führende Leitkörper 6 zwischen diesen Wicklungen außerhalb des ringkopfähnlichen Kopfteiles 9 auf der dem Aufzeichnungsmedium M abgewandten Seite mittels eines weiteren Schenkelteiles 22 entsprechend verlängert sein. Der somit ausgebildete Verlängerungsteil des Leitkörpers 6 über den Kopfteil 9 hinaus ist in der Figur allgemein mit 23 bezeichnet. Der Schenkelteil 22 ist gemäß der dargestellten Ausführungsform in der Nähe der Verbindungsstelle 14 zwischen den Magnetschenkeln 7 und 8 an den verlängerten Magnetschenkel 8 an einer Zone 24 angefügt. Um eine völlige magnetische Trennung der beiden Spulenwicklungen 17 und 20 zu gewährleisten, müssen selbstverständlich der Magnetschenkel 7 und der Schenkelteil 22 eine mindestens den Überlappungsbereich dieser beiden Spulenwicklungen einschließende geometrische Ausdehnung aufweisen.

Mit einem vorhandenen, durch die eingezeichneten Stromflußrichtungssymbole veranschaulichten Schreibstrom, der verhältnismäßig groß ist, wird in dem Magnetschenkel 7 und in dem verlängerten Schenkelteil 22 ein durch gepfeilte Linien 25 bzw. 26 angedeuteter magnetischer Fluß entgegengesetzter Richtung hervorgerufen. In einem Übergangsbereich 27 zwischen dem Magnetschenkel 7 und dem Schenkelteil 22 ist dieser magnetische Fluß praktisch null, so daß dort auch eine entsprechende Unterbrechung des Leitkörpers 6 vorgesehen werden kann. Mit der Schreibspulenwicklung 20 wird auch in dem von ihr entfernter liegenden Magnetschenkel 8 ein wenn auch entsprechend geschwächterer magnetischer Fluß erzeugt, der parallel zu den Flußrichtungen 25 und 26 gerichtet ist. Dieser höchstens sehr schwache Fluß ist durch gepfeilte Linien 25' bzw. 26' angedeutet. Im wesentlichen wird jedoch nur mit dem magnetischen Fluß 25 des Magnetschenkels 7 die Schreibfunktion an dem Pol $P_1$ ausgeübt. Der erfindungsgemäße Magnetkopf 2 schreibt somit vorteilhaft quasi wie ein Einzel-Pol-Kopf. Außer bei dieser Schreibfunktion bleibt jedoch die Spulenwicklung 20 stromlos, so daß dann der Magnetkopf 2 mit der Lesespulenwicklung 17 als gewöhnlicher Ringkopf betrieben wird.

Für die Herstellung des Magnetkopfes 2 in Dünnschicht-bzw. Dünnfilm-Technik wird im allgemeinen ein Flugkörper mit einem Substrat verwendet, das z. B. aus TiC und $Al_2O_3$ besteht. Gegebenenfalls kann das entsprechende Substrat 3 noch mit einer hinreichend dicken Isolationsschicht z. B. aus $Al_2O_3$ versehen werden. Zum Aufbau der Magnetschenkel 7 und 8 sowie des Schenkelteiles 22 werden dünne Magnetschichten aus besonderen weichmagnetischen Materialien wie z. B. aus speziellen NiFe-Legierungen (Permalloy : Ni/Fe-81/19) oder aus FeB durch Sputtern, Aufdampfen oder galvanische Abscheidung aufgebracht und jeweils durch eine nichtmagnetische Zwischenlage z. B. aus $SiO_2$ oder $Al_2O_3$ voneinander getrennt. Die Magnetisierung dieser Magnetschichten liegt dabei in der Schichtebene. Durch den Herstellungsprozeß bedingt, weisen die Magnetschichten eine uniaxiale Anisotropie auf, d. h., jede Magnetschicht hat zwei um 90° gedrehte Anisotropieachsen, die als leichte bzw. schwere Richtung bezeichnet werden. Die Magnetisierung liegt bevorzugt parallel oder antiparallel zur leichten Richtung. Die leichte Richtung der Magnetisierung kann z. B. beim Aufbringen der jeweiligen Schicht durch ein angelegtes Magnetfeld induziert werden. Sie liegt im allgemeinen immer senkrecht zur Richtung des magnetischen Flusses in dem Leitkörper 6, d. h. im Bereich der Magnetpole $P_1$ und $P_2$ im wesentlichen parallel zur Oberfläche des Aufzeichnungsmediums M. Die aufgewachsenen unterschiedlichen Schichten werden durch an sich bekannte Techniken wie Photolithographie, Plasma-, Ionenstrahl- oder naßchemisches Ätzen strukturiert und damit die Magnetschenkel des Kopfes ausgebildet.

Zum Aufbau des Magnetkopfes 2 werden zunächst auf dem Substrat 3 bzw. auf dessen Isolationsschicht die Schichten des ersten verlängerten Magnetschenkels 8 aufgebracht. Dieser Magnetschenkel ist bis auf den Bereich seiner Polspitze $P_2$ verhältnismäßig dick, beispielsweise 2 bis 4 µm dick ausgebildet und verjüngt sich zur Polspitze $P_2$ auf etwa 0,2 bis 1 µm. Der Magnetschenkel 8 wird dann bis auf die Verbindungsstellen 14 und 24 mit dem zweiten Magnetschenkel 7 bzw. dem verlängerten Schenkelteil 22 mit einer Isolations- und Spaltschicht überzogen. Diese Spaltschicht besteht z. B. aus $Al_2O_3$ oder $SiO_2$. Nach Fertigstellung dieses Magnetschenkels 8 und der Spaltschicht werden dann die einzelnen Windungen 18 der als Lesespule dienenden Wicklung 17 ebenfalls in Dünnschicht-Technik in mindestens einer zur Substratoberfläche parallelen Ebene hergestellt und strukturiert. Da die in der Wicklung 17 induzierten Ströme sehr gering sind, braucht der Leiterquerschnitt durch die elektrische Belastung praktisch nicht festgelegt zu werden. Aus fertigungstechnischen Gründen wird man allerdings extrem geringe Dicken und sehr feine Strukturen vermeiden. Die z. B. aus Cu, Au oder Al bestehenden Windungen dieser im allgemeinen mehrlagig ausgeführten Wicklung können beispielsweise Querschnitte von 0,1 µm × 3 µm aufweisen und sind in ein spezielles Einebnungsmaterial eingebettet. Dieses Material kann z. B. ein Kunststoff-Lack, insbesondere auf Polyimid-Basis sein.

In einem nächsten Verfahrensschritt werden dann der zweite lamellierte Magnetschenkel 7 sowie der Schenkelteil 22 aufgebracht und strukturiert. Dabei sind die Magnetschichten des Schenkels 7 im Bereich des Spaltes 12 nur über die Spaltschicht und in dem mittleren Bereich 13 zusätzlich über die Einebnungsschichten mit den eingelagerten Windungen 18 der Spulenwicklung 17 von dem Magnetschenkel 8 getrennt. Im Bereich der Verbindungsstelle 14 sind beide Magnetschenkel 7 und 8 aneinandergefügt, so daß eine ringkopfähnliche Gestalt des Magnetkopfes erreicht wird. Außerhalb dieses ringkopfähnlichen Kopfteiles 9 ist der Aufbau der einzelnen Schichten entsprechend.

Anschließend wird auf dem Magnetschenkel 7 sowie dem Schenkelteil 22 eine weitere Isolationsschicht abgeschieden, bevor die einzelnen Windungen 21 der Schreibspulenwicklung 20 in mindestens einer zur Substratoberfläche bzw. zu der Lesespulenwicklung 17 parallelen Ebene aufgebracht und strukturiert werden. Zuletzt wird zum Schutz des so hergestellten Dünnschicht-Magnetkopfes 2 noch eine verhältnismäßig dicke Protektionsschicht z. B. aus $Al_2O_3$ vorgesehen.

Die in den Fig. 2 bis 4 angedeuteten Ausführungsformen von Magnetköpfen nach der Erfindung unterscheiden sich von dem beschriebenen Magnetkopf 2 gemäß Fig. 1 im wesentlichen nur durch die Lage der Windungen der zusätzlichen Spulenwicklung und/oder die entsprechende Anordnung des verlängerten Schenkelteiles des den magentischen Fluß führenden Leitkörpers. Dabei sind in den Figuren übereinstimmende Teile mit den gleichen Bezugszeichen versehen.

In Abwandlung des Magnetkopfes 2 nach Fig. 1 ist bei dem Magnetkopf 29 nach Fig. 2 sein dem Substrat 3 zugewandter Magnetschenkel 30 nur als Teil des ringkopfähnlichen Kopfteiles 9 ausgebildet, d. h., dieser Schenkel weist auf der dem Aufzeichnungsmedium M abgewandten Seite dieses Kopfteiles keinen Verlängerungsabschnitt 19 wie der Schenkel 8 nach Fig. 1 auf. Außerdem kann, wie in Fig. 2 angedeutet ist, mit dem Magnetschenkel 7 und einem dem verlängerten Schenkelteil 22 nach Fig. 1 entsprechenden Teil 31 seines Leitkörpers ein gemeinsames Bauteil 32 z. B. durch gemeinsames Abscheiden und Strukturieren entsprechender Magnetschichten ausgebildet sein. Auf Grund des im Vergleich zu dem Magnetschenkel 8 verkürzten Magnetschenkels 30 können dabei die Windungen der Lesespulenwicklung 33 und der Schreibspulenwicklung 34 in verschiedenen parallelen Ebenen zu liegen kommen.

Bei der Ausführungsform eines Magnetkopfes 35 gemäß Fig. 3 bilden wie bei dem Magnetkopf 29 nach Fig. 2 der äußere Magnetschenkel 7 und ein verlängerter Schenkelteil 36 seines den magnetischen Fluß führenden Leitkörpers 37 ein gemeinsames Bauteil 38. Bei diesem Magnetkopf ist ein über den ringkopfähnlichen Kopfteil 9 hinaus verlängerter Schenkel 8 wie nach Fig. 1 vorgesehen. Neben einer entsprechenden Lesespule 17 sind jedoch bei diesem Magnetkopf 35 die Windungen seiner Schreibspulenwicklung 39 vorteilhaft unmittelbar auf der Oberfläche des Substrates 3 aufgebracht, bevor die einzelnen Schichten des verlängerten Magnetschenkels 8 abgeschieden sind. Der Magnetschenkel 8 mit seinem Verlängerungsabschnitt 19 dient hier somit zur räumlichen und magnetischen Trennung von Lese- und Schreibspulenwicklung.

Bei dem in Fig. 4 gezeigten Magnetkopf 40 nach der Erfindung ist abweichend von dem Magnetkopf 35 nach Fig. 3 lediglich auf den Verlängerungsteil 36 seines äußeren Magnetschenkels 7 über den ringkopfähnlichen Kopfteil 9 hinaus verzichtet.

Bei den Magnetköpfen nach der Erfindung gemäß den Fig. 1 bis 4 wurde davon ausgegangen, daß die Windungen der jeweiligen Schreibspulenwicklungen im Bereich des ringkopfähnlichen Kopfteiles 9 größere Teile eines der Magnetschenkel überdecken. Die Schreibspulenwicklungen können jedoch auch so ausgebildet werden, daß ihre Windungen nur im Bereich der schreibenden Magnetpole an den Magnetschenkelenden zu liegen kommen. Eine entsprechende Gestaltung der Schreibspulenwicklung ist insbesondere bei Ausführungsformen von Magnetköpfen auf verhältnismäßig einfache Weise auszuführen, deren Schreibspulenwicklung zumindest im Bereich des ringkopfähnlichen Kopfteiles 9 auf der Seite des Substrates 3 angeordnet ist (vgl. Fig. 3 und 4).

Gegebenenfalls können bei hohen Windungszahlen der jeweiligen Lesespulenwicklung auf Grund der entsprechenden Spuleninduktivität zusammen mit unvermeidlichen Schaltungskapazitäten Resonanzen auftreten, die einen Einsatz der Magnetköpfe bei hohen Übertragungsraten von z. B. 100 MHz erschweren. In diesen Fällen sind insbesondere die Ausführungsformen der Magnetköpfe nach den Fig. 2 und 4 vorteilhaft, bei denen die jeweilige Lesespulenwicklung im Bereich des verlängerten Kopfteiles 23 sich nicht durch den Zwischenraum zwischen zwei Magnetschenkelteilen des dort ebenfalls ringkopfähnlich gestalteten Leitkörpers erstrecken, sondern bei denen dort nur ein einziger verlängerter Schenkelteil vorhanden ist, der zwischen den entsprechenden Teilen der Schreibspulenwicklung und der Lesespulenwicklung liegt. Mit dieser Ausgestaltung ist eine Reduzierung der Induktivität der Lesespulenwicklung bewirkt.

Wie aus den in den Figuren dargestellten Ausführungsbeispielen hervorgeht, kommt jeweils die mindestens eine Windung der Schreibspulenwicklung 20 bzw. 34 bzw. 39 sowohl in den Bereich des ringkopfähnlichen Kopfteiles 9 als auch in den Bereich des Verlängerungsteiles 23 des Leitkörpers 6 bzw. 37 zu liegen.

**Patentansprüche**

1. Dünnschicht-Magnetkopf (2, 29, 35, 40, 41 42) mit einem schichtweisen Aufbau auf einem nicht-magnetischen Substrat (3) für ein Aufzeichnungsmedium (M), das mit einer magnetisierbaren Speicherschicht (4) versehen ist, in welche längs einer Spur Informationen durch senkrechte (vertikale) Magnetisierung der Speicherschicht (4) einzuschreiben sind, welcher Magnetkopf
- einen den magnetischen Fluß führenden Leitkörper (6, 37) aufweist, der einen von zwei Magnetschenkeln (7, 8, 30) ringkopfähnlich ausgebildeten Kopfteil (9) und einen über die dem Aufzeichnungsmedium (M) abgewandte Seite dieses Kopfteiles (9) hinaus verlängerten Schenkelteil (19, 22, 31, 36) enthält, wobei die dem Aufzeichnungsmedium (M) zugewandten Pole ($P_1$, $P_2$) der beiden Magnetschenkel (7, 8, 30) in Bewegungsrichtung (v) des Kopfes gesehen hintereinander und mit vorbestimmtem Abstand (w) zueinander angeordnet sind,

- eine zumindest weitgehend flache, nur für die Lesefunktion dienende Spulenwicklung (Lesespulenwicklung 17, 33) enthält, deren Windungen (18) sich durch einen zwischen den Magnetschenkeln (7, 8, 30) ausgebildeten Zwischenraum (16) erstrecken, sowie

- mit einer zusätzlichen, zumindest weitgehend flachen Spulenwicklung (Schreibspulenwicklung 20, 34, 39) für die Schreibfunktion versehen ist, die einen dem Aufzeichnungsmedium (M) zugewandten Wicklungsteil im Bereich eines der beiden Magnetschenkel (7, 8, 30) des ringkopfähnlichen Kopfteiles (9) und einen gegenüberliegenden, von dem Aufzeichnungsmedium (M) abgewandten Wicklungsteil an dem verlängerten Schenkelteil (19, 22, 31, 36) aufweist, dadurch gekennzeichnet, daß sowohl der dem Aufzeichnungsmedium (M) zugewandte Wicklungsteil als auch der gegenüberliegende, von dem Aufzeichnungsmedium (M) abgewandte Wicklungsteil der Schreibspulenwicklung (20, 34, 39) längs derselben Seite des gesamten den magnetischen Fluß führenden Leitkörpers (6, 37) angeordnet sind, wobei die Schreibspulenwicklung (20, 34, 39) von der Lesespulenwicklung (17, 33) magnetisch und räumlich getrennt ist, indem sich zwischen diesen Spulenwicklungen einer der beiden Magnetschenkel (7, 8) des ringkopfähnlichen Kopfteiles (9) und der verlängerte Schenkelteil (19, 22, 31, 36) mit entsprechenden geometrischen Ausdehnungen erstrecken.

2. Magnetkopf nach Anspruch 1, dadurch gekennzeichnet, daß die Lesespulenwicklung (17; 33) als ein- oder mehrlagige, zumindest weitgehende planare Struktur mit mehreren Windungen (18) ausgebildet ist.

3. Magnetkopf nach Anspruch 1 oder 2, dadurch gekennzeichnet, daß zumindest teilweise sein den Magnetfluß führender Leitkörper (6; 37) aus weichmagnetischem Material besteht.

4. Magnetkopf nach Anspruch 3, dadurch gekennzeichnet, daß sein den Magnetfluß führender Leitkörper (6; 37) aus einem Material besteht, dessen leichte Magnetisierung zumindest weitgehend senkrecht zur Führungsrichtung des Magnetflusses gerichtet ist.

5. Magnetkopf nach einem der Ansprüche 1 bis 4, dadurch gekennzeichnet, daß der Abstand (w) zwischen den dem Aufzeichnungsmedium (M) zugewandten Enden (10, 11) der Pole ($P_1$, $P_2$) der Magnetschenkel (7, 8; 30) höchstens 1 μm beträgt.

6. Magnetkopf nach einem der Ansprüche 1 bis 5, dadurch gekennzeichnet, daß zwischen den Magnetschenkeln (7, 8; 30) des ringkopfähnlichen Kopfteiles (9) ein vom Abstand (w) zwischen den dem Aufzeichnungsmedium (M) zugewandten Enden (10, 11) ihrer Pole ($P_1$, $P_2$) auf einen größeren Abstand (w') erweiterter Zwischenraum (16) ausgebildet ist, in dem die Windungen (18) der Lesespulenwicklung (17; 33) teilweise angeordnet sind.

7. Magnetkopf nach einem der Ansprüche 1 bis 6, dadurch gekennzeichnet, daß der verlängerte Schenkelteil (19; 31; 36) mit einem der Magnetschenkel (8; 7) des ringkopfähnlichen Kopfteiles (9) ein gemeinsames Bauteil (32, 38) bildet.

8. Magnetkopf nach einem der Ansprüche 1 bis 7, dadurch gekennzeichnet, daß die Windungen der Schreibspulenwicklung (39) auf der dem Substrat (3) zugewandten Seite des Magnetkopfes (35, 40, 41) zumindest teilweise im Bereich des den Pol ($P_2$) bildenden Endes (11) des benachbarten Magnetschenkels (8) angeordnet sind.

9. Magnetkopf nach einem der Ansprüche 1 bis 8, dadurch gekennzeichnet, daß der den magnetischen Fluß führenden Leitkörper (6, 37) in einem Übergangsbereich (27) zwischen dem ringkopfähnlichen Kopfteil (9) und einem den verlängerten Schenkelteil (19, 22, 31, 36) umfassenden Verlängerungsteil (23) eine magnetische Unterbrechung enthält.

10. Magnetkopf nach einem der Ansprüche 1 bis 9, dadurch gekennzeichnet, daß die zusätzliche Schreibspulenwicklung (20, 34, 39) eine oder mehrere Windungen in mindestens einer Ebene aufweist.

11. Anordnung mit einem Magnetkopf nach einem der Ansprüche 1 bis 10, dadurch gekennzeichnet, daß während der Schreibfunktion die Lesespulenwicklung (17, 33) an ihren Enden mit einem Widerstand mit einem vorbestimmten geringen Ohm-Wert überbrückt ist.

## Claims

1. Thin-layered magnetic head (2, 29, 35, 40, 41, 42) with a construction in layers on a non-magnetic substrate (3), for use with a recording medium (M), which is equipped with a magnetizable storage layer (4), in which, along a track, information is able to be registered through perpendicular (vertical) magnetization of the storage layer (4), which magnetic head

- has a conducting body (6, 37) directing the magnetic flux, which body contains one head part (9), constructed from two magnet limbs (7, 8, 30) like an annular recording head, and a lengthened limb part (19, 22, 31, 36) extending over the side of this head part (9) which is directed away from the recording medium (M), wherein the poles ($P_1$, $P_2$) of the two magnet limbs (7, 8, 30) directed towards the recording medium (M) are arranged, when seen from the direction of movement (v) of the head, behind one another and at a predetermined distance (w) from one another,

- contains an at least substantially flat coil winding (reading coil winding 17, 33) only serving for the reading function, the windings (18) of which extend through a space (16) constructed between the magnet limbs (7, 8, 30), and

- is equipped with an additional, at least substantially flat, coil winding (writing coil winding 20, 34, 39) for the writing function which has a winding part facing the recording medium (M) in the region of one of the two magnet limbs (7, 8, 30) of the head part (9) like an annular recording head and an opposite winding part facing away from the recording medium (M) on the lengthened limb part (19, 22, 31, 36), characterised in that both the winding part facing the recording medium (M) and the opposite winding part of the writing coil winding (20, 34, 39) facing away from the recording medium (M) are arranged along the same side of the whole conducting body (6, 37) directing the magnetic flux, the writing coil winding (20, 34, 39) being magnetically and spatially separated from the reading coil winding (17, 33), whilst between these coil windings one of the two magnet limbs (7, 8) of the head part (9) like an annular recording head and the lengthened limb part (19, 22, 31, 36) extend with corresponding geometric extensions.

2. Magnetic head according to claim 1, characterised in that the reading coil winding (17 ; 33) is constructed as a one-layered, or several-layered, at least substantially planar structure with several windings (18).

3. Magnetic head according to claim 1 or 2, characterised in that its conducting body (6 ; 37) directing the magnetic flux consists at least partially of soft magnetic material.

4. Magnetic head according to claim 3, characterised in that its conducting body (6 ; 37) directing the magnetic flux consists of a material, the easy magnetization of which is directed at least substantially perpendicular to the leading direction of the magnetic flux.

5. Magnetic head according to one of claims 1 to 4, characterised in that the distance (w) between the ends (10, 11) facing the recording medium (M) of the poles ($P_1$, $P_2$) of the magnetic limbs (7, 8 ; 30) is at the most 1 μm.

6. Magnetic head according to one of claims 1 to 5, characterised in that constructed between the magnetic limbs (7, 8 ; 30) of the head part (9) like an annular recording head there is a space (16) extending over a larger distance (w') than the distance (w) between the ends (10, 11) facing the recording medium (M), of their poles ($P_1$, $P_2$), the windings (18) of the reading coil winding (17 ; 33) being arranged partly in said space.

7. Magnetic head according to one of claims 1 to 6, characterised in that the lengthened limb part (19 ; 31 ; 36) forms a common component part (32, 38) together with one of the magnetic limbs (8 ; 7) of the head part (9) like an annular recording head.

8. Magnetic head according to one of claims 1 to 7, characterised in that the windings of the writing coil winding (39) on the side of the magnetic head (35, 40, 41) facing the substrate (3) are arranged, at least partly in the region of the end (11) forming the pole ($P_2$) of the adjacent magnetic limb (8).

9. Magnetic head according to one of claims 1 to 8, characterised in that the conducting body (6, 37) directing the magnetic flux contains a magnetic break in a transition region (27) between the head part (9) like an annular recording head and a lengthening part (23) surrounding the lengthened limb part (19, 22, 31, 36).

10. Magnetic head according to one of claims 1 to 9, characterised in that the additional writing coil winding (20, 34, 39) has one or several windings in at least one plane.

11. Arrangement with a magnetic head according to one of claims 1 to 10, characterised in that during the writing function the reading coil winding (17, 33) is bridged at its ends with a resistor with a predetermined limited Ohm-value.

**Revendications**

1. Tête magnétique en couche mince (2, 29, 35, 40, 41, 42), qui est constituée de couches superposées sur un substrat (3) non magnétique et est destinée à un milieu d'enregistrement (M) pourvu d'une couche-mémoire (4) aimantable dans laquelle des informations sont à inscrire le long d'une piste par aimantation perpendiculaire (verticale) de la couche mémoire (4), tête magnétique qui présente

- un corps conducteur (6, 37) guidant le flux magnétique et comportant une partie de tête (9) formée par deux branches magnétiques (7, 8, 30) à la façon d'une tête annulaire et une partie à prolongement de branche (19, 22, 31, 36) prolongeant cette partie de tête (9) du côté opposé au milieu d'enregistrement (M), les pôles ($P_1$, $P_2$) dirigés vers le milieu d'enregistrement (M) des deux branches magnétiques (7, 8, 30) étant disposés l'un derrière l'autre dans le sens de mouvement (v) de la tête et à une distance (w) préfixée l'un par rapport à l'autre,

- un enroulement de bobine (enroulement de bobine de lecture (17, 33) qui est plat dans une large mesure, au moins, et sert seulement à la fonction de lecture, dont les spires (18) s'étendent à travers un espace intermédiaire (16) formé entre les branches magnétiques (7, 8, 30), ainsi que

- un enroulement de bobine supplémentaire (enroulement de bobine d'inscription 20, 34, 39) qui est plat au moins dans, une large mesure, et est prévu pour la fonction d'inscription, qui présente une partie d'enroulement dirigée vers le milieu d'enregistrement (M) dans la région d'une des deux branches magnétiques (7, 8, 30) de la partie de tête (9) semblable à une tête annulaire et une partie d'enroulement opposée, éloignée du milieu d'enregistrement (M), sur la partie à prolongement de branche,

caractérisée en ce que la partie d'enroulement dirigée vers le milieu d'enregistrement (M) comme la partie d'enroulement opposée, éloignée du milieu d'enregistrement (M), de l'enroulement de bobine d'inscription (20, 34, 39), sont disposées le long du même côté de l'ensemble du corps conducteur (6, 37) guidant le flux magnétique, l'enroulement de bobine d'inscription (20, 34, 39) étant séparé magnétiquement et dans l'espace de l'enroulement de bobine de lecture (17, 33) par le fait que l'une des deux branches magnétiques (7, 8) de la partie de tête (9) semblable à une tête annulaire et la partie à prolongement de branche (19, 22, 31, 36) s'étendent, en ayant des étendues géométriques adéquates, entre ces enroulements de bobine.

2. Tête magnétique selon la revendication 1, caractérisée en ce que l'enroulement de la bobine de lecture (17 ; 33) est réalisée comme une structure à une ou plusieurs couches, structure qui est planaire dans une large mesure, au moins, et qui comporte plusieurs spires (18).

3. Tête magnétique selon la revendication 1 ou 2, caractérisée en ce que son corps conducteur (6, 37) guidant le flux magnétique, est réalisé, en partie au moins, avec un matériau magnétique doux.

4. Tête magnétique selon la revendication 3, caractérisée en ce que son corps conducteur (6, 37) guidant le flux magnétique, est réalisé avec un matériau dont la direction d'aimantation aisée est au moins sensiblement perpendiculaire à la direction de guidage du flux magnétique.

5. Tête magnétique selon une des revendications 1 à 4, caractérisée en ce que la distance (w) entre les extrémités (10, 11) dirigées vers le milieu d'enregistrement (M) des pôles ($P_1$, $P_2$) des bran-ches magnétiques (7, 8 ; 30) est au plus égal à 1 μm.

6. Tête magnétique selon une des revendications 1 à 5, caractérisée par la formation, entre les branches magnétiques (7, 8 ; 30) de la partie de la tête (9) semblable à une tête annulaire, d'un espace intermédiaire (16) qui s'élargit, à partir de la distance (w) entre les extrémités (10, 11) dirigées vers le milieu d'enregistrement (M) de ses pôles ($P_1$, $P_2$), à une distance (w') plus grande entre les branches, espace dans lequel sont disposées en partie les spires (18) de l'enroulement de bobine de lecture (17 ; 33).

7. Tête magnétique selon une des revendications 1 à 6, caractérisée en ce que la partie à prolongement de branche (19 ; 31 ; 36) forme un élément commun (32, 38) avec l'une des branches magnétiques (8 ; 7) de la partie de la tête (9) semblable à une tête annulaire.

8. Tête magnétique selon une des revendications 1 à 7, caractérisée en ce que les spires de l'enroulement de bobine d'inscription (39) sont disposées au moins partiellement sur le côté dirigé vers le substrat (3) de la tête magnétique (35, 40, 41), dans la région de l'extrémité (11) formant le pôle ($P_2$) de la branche magnétique (8) voisine.

9. Tête magnétique selon une des revendications 1 à 8, caractérisée en ce que le corps conducteur (6, 37), guidant le flux magnétique, contient une interruption magnétique dans une zone de transition (27) entre la partie de la tête (9) semblable à une tête annulaire et une partie de prolongement (23) comprenant la partie à prolongement de branche (19, 22, 31, 36).

10. Tête magnétique selon une des revendications 1 à 9, caractérisée en ce que l'enroulement de bobine d'inscription supplémentaire (20, 34, 39) présente une ou plusieurs spires dans au moins un plan.

11. Dispositif comprenant une tête magnétique selon une des revendications 1 à 10, caractérisé en ce que, pendant la fonction d'inscription, l'enroulement de la bobine de lecture (17, 33) est shunté à ses extrémités par une résistance ayant une faible valeur ohmique préfixée.

FIG 3

FIG 4